# EUROPÄISCHE PATENTSCHRIFT

(11) **EP 0 909 748 B1**
(45) Veröffentlichungstag und Bekanntmachung des Hinweises auf die Patenterteilung: **21.08.2002**
(21) Anmeldenummer: 98119076.2
(22) Anmeldetag: 09.10.1998
(51) Int. Cl.: C04B 41/85

(54) **Verfahren zur Erzeugung von farbigem Dekor auf keramischen Oberflächen und ein Verfahren zum Färben von Keramik**
Method for generating coloured decorations on ceramic surfaces and method for colouring ceramics
Procédé pour la réalisation de décors colorés sur des surfaces céramiques et procédé de coloration de céramiques

(30) Priorität: 14.10.1997 DE 19745262
(43) Veröffentlichungstag der Anmeldung: 21.04.1999
(73) Patentinhaber: BK Giulini Chemie GmbH & Co. OHG, 67065 Ludwigshafen (DE)
(72) Erfinder: Staffel, Thomas, Dr., 67269 Grünstadt (DE); Klein, Thomas, Dr., 69121 Heidelberg (DE); Straub, Jürgen, 68305 Mannheim (DE); Raab, Günther, 69514 Laudenbach (DE); Schmithüsen, Jens, 56410 Montabauer (DE)

(56) Entgegenhaltungen:
- EP-A- 0 704 411
- WO-A-97/38952
- DE-A- 3 109 927
- CHEMICAL ABSTRACTS, vol. 103, no. 26, 30. Dezember 1985 Columbus, Ohio, US; abstract no. 219817a, XP000189272 & JP 60 118661 A (INA SEITO CO LTD) 26. Juni 1985
- DATABASE WPI Section Ch, Week 8549 Derwent Publications Ltd., London, GB; Class L02, AN 85-305900 XP002089169 & JP 60 210581 A (JANISU KOGYO KK) , 23. Oktober 1985
- MATTHES WOLF E: "Keramische Glasuren" 1985 , VERLAGSGESELLSCHAFT RUDOLF MÜLLER GMBH XP002089168 14143 * Seite 103, linke Spalte, Absatz 4 *

## Beschreibung

Die vorliegende Erfindung hat zum Gegenstand ein Verfahren gemäß Anspruch 1 zur Erzeugung von Dekor auf keramischen Oberflächen und ein neues Auftragsverfahren zum Färben von keramischen Oberflächen. Die Erfindung betrifft auch eine Keramik gemäß Anspruch 10, die nach dem beanspruchten Verfahren erhältlich ist.

Bei der Herstellung von farbigen Oberflächen kommen in erster Linie feuerfeste Pigmente zum Einsatz, die bei Brenntemperaturen von bis zu 1400°C in die Keramikoberfläche eingebrannt werden. Als Pigmente werden hauptsächlich die farbigen Oxyde der Übergangsmetalle, so z.B. des Eisens, Chroms, Mangans, Kobalts etc., aber auch solche die in Rein- und Mischphasen in Spinellstruktur vorkommen, eingesetzt. So werden z.B. Oxyde der Elemente Al, Ni, Co, Cu, Mn, Fe, U, V, sowie eine Reihe von den entsprechenden Silikaten, Sulfiden und deren Mischphasen mit farbgebenden in farblosen Wirtsgittern von Rutil-Typ, wie TiO₂, ZrO₂, ZrSiO₂ und PbO₂ verwendet.

Zum Färben von Keramikoberflächen können diese Pigmente in Pulverform mit glasbildenden Substanzen, mit sog, Fritten, auf eine vorgebrannte und vorgeheizte Keramikoberfläche aufgebracht und danach gebrannt werden. Hier findet eine Verschmelzung bzw. Versinterung statt. Man spricht in diesem Zusammenhang auch von Schmelz- oder Aufglasurpigmenten. In der EP 445 876 wird ein solches Verfahren beschrieben.

In diesem Zusammenhang muss noch die Herstellung von nicht-glasierter Keramik durch die sog. Engoben-Technik erwähnt werden. Hierbei wird eine Aufschlämmung von mit Pigmenten vermischten Tonmineralien in dünner Schicht auf das keramische Material aufgebracht und eingebrannt. Dabei wird nicht das gesamte Keramikmaterial durchgehend eingefärbt, sondern nur eine relativ dünne Oberflächenschicht.

Vorhandene Rauhigkeiten und Unebenheiten in dieser Schicht lassen sich durch Abschleifen und Polieren nachträglich noch beseitigen. Nachteilig bei diesem Verfahren ist es jedoch, daß immer die gesamte Oberflächenschicht eingefärbt ist und keine Oberflächenmuster erzeugt werden können.

Diesen Nachteil wollte man dann durch eine andere Auftragstechnik überwinden, bei dem man Lösungen von farbigen Salzen, sog. Färbelösungen auf die farblose Keramikoberfläche aufgebracht hat. Die Lösungen konnten so in die Poren der Oberfläche eindringen und nach dem Brennen konnte sich so eine farbige Oberflächenschicht bilden.

In der DE-A1 195 46 325 wurde die Keramikoberfläche auf diese Weise mit der Farbe rosa eingefärbt, und in der DE-A1 196 25 236 entsprechend schwarz. Mit dieser Technik lassen sich zwar viele Farbnuancen erzeugen, jedoch konnte man mit dieser Auftragstechnik keine Muster, z.B. Punkt-oder Strichmuster bzw. Dekor erzeugen, die jedoch in der Keramikindustrie zunehmend verlangt werden, um modischen Trends entsprechen zu können.

Ein Verfahren und Farbzubereitung zur Herstellung von Porphyr- und ähnlichen Dekors auf keramischem Material ist in der DE 31 09 927 beschrieben. Hier erfolgt die Herstellung der porphyrartig dekorierter Fliesen nach dem Siebdruckverfahren. Dabei wird eine mit Porphyr- oder ähnlichem Dekor versehenen Siebdruckschablone eine oder mehrere keramische Farbzubereitungen auf das keramische Material aufgetragen, wonach das dekorierte Material getrocknet und gebrannt wird. Die Farbzubereitungen enthalten färbende Salze oder Oxyde von Metallen in einem Gemisch aus Lösemitteln und Wasser. Der Porphyreffekt dringt von der Auftragsseite in die Tiefe des Scherbens ein und ist abriebbeständig. Mit diesem Verfahren lassen sich jedoch kein Punkt- und Strichmuster erzeugen.

Es stellte sich somit die Aufgabe, ein Verfahren zu finden, mit dem es einerseits möglich ist, die Keramikoberfläche dauerhaft und intensiv zu färben, aber andererseits auch Dekor und Muster zu erzeugen,, insbesondere Punkt und Strichmuster.

Überraschenderweise konnte die Lösung der Aufgabe durch ein Verfahren gelöst werden, das dadurch gekennzeichnet ist, daß eine gegebenenfalls mit Wasser und/oder Haftmittel vorbehandelte Keramikoberfläche, mit einer Schicht versehen wird, die pulverförmige Farbpigmente oder pulverförmige farbgebende, wasserlösliche Metallsalze der Übergangsmetalle und/oder wasserunlösliche Farbpigmente der Übergangsmetalle und der seltenen Erden enthält, diese Schicht nach dem Auftragen mit Wasser besprüht wird und das Keramikmaterial in einem Ofen bis 1400°C gebrannt wird.

Durch die Änderung der Konzentration des Beschichtungspulvers lassen sich Schattierungen auf der Oberfläche erzeugen. Durch das nachträgliche Besprühen der Keramikoberfläche lösen sich die Metallsalze an bzw. auf, die Pigmente hingegen werden in Wasser suspendiert bzw. dispergiert.

In einer bevorzugten Verfahrensvariante kann auf der Keramikoberfläche durch Auflegen einer Schablone auch ein Muster erzeugt werden.

In einer weiteren Verfahrensvariante kann das farbgebende Metallsalzpulver durch Aufpressen auf die Keramikoberfläche aufgebracht werden.

Als Haftmittel können die unterschiedlichen wasserlöslichen polymeren Cellulosether, Stärkeether, aber auch wasserlösliche Verdickungsmittel auf der Basis von Bentone-Gelen verwendet werden. Diese Mittel sind alle im Handel erhältlich. Das Aufbringen der Haftmittel kann durch Aufstreichen, Aufstreuen oder Aufsprühen erfolgen.

Die beim erfinderischen Verfahren verwendbaren farbgebenden Metallsalze sind in der Regel wasserlöslich und dringen beim Aufsprühen des Wassers in die Keramikoberfläche ein. Als besonders geeignet haben sich die Oxalate, Citrate, die EDTA-Komplexsalze der Übergangsmetalle, z.B. des Eisens, Kobalts, Nickels, Mangans, Chroms, Rhodiums, Vanadins, Kupfers, Golds etc. erwiesen.

Auch die Salze von seltenen Erden sind in diesem Verfahren verwendbar. Durch ihre Verwendung ist es möglich Lüstereffekte und Pastelltöne zu erzeugen. Der besondere Vorteil des Pulverauftrags liegt darin, daß die Metallverbindungen in der festen Form nebeneinander beständig sind. So können ansonsten in einer Lösung miteinander nicht kompatible Metallsalze gemeinsam verwendet werden.

Natürlich ist es auch möglich wasserunlösliche Farbpigmente auf die gleiche Weise zu verwenden. Durch das Befeuchten der Pigmentpulver mit Wasser werden sie zwar nicht gelöst, aber dringen in die Keramikoberfläche in Form einer Suspension leichter ein.

Beim vorliegendem Verfahren beträgt die Korngrößenverteilung des Metallpulvers 10µm bis 1000 µm, bevorzugt 50 bis 500 µm.

In einigen Fällen kann die Zugabe von Fließmitteln vorteilhaft sein. Diese verbessern die Fließeigenschaften und das Eindringvermögen der Metallsalze beim Brennvorgang.

Aufgrund der chemischen und physikalischen Stabilität der Metallsalze lassen sich die Verbindungen in unterschiedlichen Konzentration und Mischungen einsetzen, was Abtönungen, Schattierungen, Punktmuster an verschiedenen Stellen der Keramikoberfläche ermöglicht.

Insbesondere Punktmuster sind mit keiner Methode so leicht herstellbar. Es können so Punktmuster hergestellt werden, die in der Mitte konzentriert und folglich farbintensiver sind, als am Rand, wo sie schwächer gefärbt erscheinen.

Durch die Variation der Pulvermenge an bestimmten Stellen der Keramikoberfläche lassen sich unterschiedliche Schichttiefen erzeugen. Die übliche Schichttiefe, die bei einer gefärbten Keramikoberfläche erforderlich, um die mechanische Nachbearbeitung, wie Schleifen und Polieren noch ermöglicht, beträgt 1-3 mm. Mit der Pulverauftragsmethode ist es jedoch möglich Schichttiefen von bis zu 4 mm zu erzeugen.

Es ist auch ein wesentlicher Vorteil dieser Erfindung, daß sich durch die unterschiedlichen Korngrößen der Metallsalzpulver die Punktstruktur, bzw. die Oberflächenstruktur von grob bis fein ohne Probleme einstellen lässt. Die Korngrößen der hierzu geeigneten Metallpulver kann variieren von 50µ bis 0,5 mm, bevorzugt zwischen 10µ bis 1000µ.

Die folgenden Beispiele erläutern die Erfindung näher.

Es wird im Beispiel 1 zunächst ein geeignetes Metallsalzpulver des Kobalts hergestellt und im Beispiel 2 die Verwendung des Metallpulvers zur Färbung der Keramikoberfläche beschrieben.

### Beispiel 1: Herstellung eines Kobaltpulvers:

Die Kobalt-EDTA Lösung wird in einer Porzellanschale bei ca. 85°C 48 Stunden lang getrocknet. Die Trockensubstanz wird dann in einem Mörser fein vermahlen und über ein Sieb in zwei Fraktionen getrennt. Die erste Fraktion wies eine Kornverteilung von 0,3 bis 1 mm und die zweite Fraktion Korngrößen kleiner als 0,3 mm auf. Das so erhaltene Pulver ist für den Pulverauftrag direkt verwendbar.

Auf die gleiche Weise lässt sich natürlich auch eine Eisen-Citrat Lösung zum Pulver verarbeiten. Nach dem Sieben in zwei Korngrößen-Fraktionen können beide Pulver gemeinsam auf eine Keramikoberfläche aufgebracht werden.

### Beispiel 2: Pulverbeschichtung einer Keramikoberfläche

Auf eine unbehandelte Keramikfliese der Marke Ariostea^{R} , die eine hellbraune Grundfarbe hat, wird zunächst das Kobaltpulver aus Beispiel 1 aufgebracht. Vor dem Auftragen des Pulvers wird die Keramikoberfläche mit Wasser befeuchtet. Auf der feuchten Oberfläche löst sich das Metallsalzpulver teilweise auf, und kann in die Oberfläche langsam eindringen. Die so behandelte Fliesen wird in einem Ofen , Marke Naber, Modell 18H gebrannt. Dazu wird der Ofen 360 Minuten lang auf 600 °C aufgeheizt und dann bis 1400 °C weiter aufgeheizt. Diese Temperatur wird 60 Minuten lang gehalten und danach langsam auf Zimmertemperatur abgekühlt.
Die auf diese Weise hergestellte Fliese weist ein intensiv blaues Punktmuster mit hellbraunem Untergrund auf.
In einem weiterem Beispiel werden das Eisen- und das Kobaltpulver gemeinsam auf die Keramikoberfläche aufgebracht. Dabei wurde ein Kobaltpulver in einer anderen Korngröße als das Eisenpulver verwendet. Durch die gemeinsame Verwendung der beiden Metallsalzpulver entstanden unterschiedlich gefärbte Punktmuster mit einer zufälligen Farbverteilung, die teilweise durch das Ineinanderlaufen der mit Wasser angesprühten Pulver bedingt wurde. Die entstandene Farbe der Keramikoberfläche war intensiv blau-grün.

Die so erzeugten Rohfliesen können nach dem Brennen selbstverständlich geschliffen oder poliert werden, je nach Wunsch.

### Beispiel 3: Erzeugung eines Musters durch die Verwendung von Schablonen

Auf eine mit Wasser vorbehandelte Fliese der Marke Italgraniti^{R}, die eine weiße Grundfarbe hat, wird zunächst eine Kobaltsalzlösung gesprüht. Auf diese eingefärbte Oberfläche wird eine Schablone aufgelegt und anschließend grobes Eisenpulver mit einer Korngröße von ca. 1 mm aufgestreut. Dann wird mit Wasser erneut befeuchtet und mit einer Transparentglasur überzogen. Durch das sehr grobe Eisenpulver, welches nur suspendiert bzw. teilweise angelöst wird, entsteht ein reliefartiger Eindruck des Musters.

### Beispiel 4: Aufpressen des farbgebenden Metallsalzes

Die entsprechenden farbgebenden Metallsalze werden mit der Keramikmasse gemischt. Dieses Pulvergemisch wird auf die Keramikoberfläche, die mit einem Haftmittel versehen wurde, durch Aufstreuen aufgebracht. Anschließend wird mittels einer geeigneten Presse dieses Gemisch in die Oberfläche eingepresst. Der Druck richtet sich nach der Größe und der Stärke des Keramikmaterials. Anschließend wird die verpresste Oberfläche mit Wasser angesprüht und anschließend bei ca. 1400 °C in einem Ofen gebrannt. Es entsteht auf diese Weise eine reliefartige Oberfläche mit deutlicher Kornstruktur. Diese Fläche kann natürlich nachträglich noch geschliffen und poliert werden.

## Patentansprüche

1. Verfahren zum Erzeugen von farbigem Dekor auf Oberflächen nichglasierter Keramiken, bei dem zumindest ein farbgebendes Metallsalz und/oder Farbpigment in Pulverform auf die Keramikoberfläche aufgetragen wird, **dadurch gekennzeichnet,**
- **daß** die Keramikoberfläche vor dem Auftragen des Metallsalzes und/oder des Farbpigmentes mit Wasser befeuchtet wird, und/oder
- **daß** das Metallsalz und/oder das Farbpigment nach dem Auftragen auf die Keramikoberfläche mit Wasser besprüht wird und
- **daß** die Keramik anschliessend gebrannt wird.

2. Verfahren nach Anspruch 1, **dadurch gekennzeichnet, daß** das farbgebende Metallsalz oder das Farbpigment ausgewählt wird aus Metallsalzen oder Farbpigmenten der Übergangsmetalle, der seltenen Erden oder Mischungen davon.

3. Verfahren nach Anspruch 1 oder 2, **dadurch gekennzeichnet, daß** das Brennen bei einer Temperatur von bis zu 1400 °C durchgeführt wird.

4. Verfahren nach den Ansprüchen 1 bis 3, **dadurch gekennzeichnet, daß** das auf die Keramik aufzutragende Metallsalz zuvor in zwei Fraktionen unterschiedlicher Korngrößenverteilung aufgetrennt und beide Fraktionen anschließend gemeinsam auf die Keramik aufgetragen werden.

5. Verfahren nach Anspruch 4, **dadurch gekennzeichnet, daß** die eine Fraktion eine Korngrößenverteilung von 0,3 bis 1 mm und die zweite Fraktion eine Korngrößenverteilung kleiner als 0,3 mm aufweist.

6. Verfahren nach einem der Ansprüchen 1 bis 5, zur Herstellung von Punktmustern

7. Verfahren nach einem der Ansprüche 1 bis 3, **dadurch gekennzeichnet, daß** zwei Metallsalze unterschiedlicher Korngröße verwendet und nacheinander auf die Keramikoberfläche aufgetragen werden.

8. Verfahren nach einem der Ansprüche 1 bis 5, **dadurch gekennzeichnet, daß** das farbgebende Metallsalz zunächst mit ebenfalls pulverförmiger Keramikmasse vermischt und anschließend auf die Keramikoberfläche aufgetragen wird.

9. Verfahren nach Anspruch 7 oder 8 zur Herstellung von farbigem Dekor mit reliefartiger Oberfläche.

10. Keramik mit farbigem Dekor und/oder reliefartiger Oberfläche mit einer Schichttiefe der gefärbten Keramikoberfläche von > 3 bis 4 mm, erhältlich nach dem Verfahren gemäß einem der Ansprüche 1 bis 9.

## Claims

1. Method for producing coloured decoration on the surfaces of unglazed ceramics whereby at least one colour-causing metal salt and/or colour pigment in powder form is applied to the ceramic surface, **characterised in that**
- the ceramic surface is wetted with water before application of the metal salt and/or the colour pigment and/or
- the metal salt and/or the colour pigment is sprayed with water after application to the ceramic surface and
- the ceramic is subsequently fired.

2. Method according to Claim 1, **characterised in that** the colour-causing metal salt or the colour pigment is selected from metal salts or colour pigments of the transition metals, the rare earth metals or mixtures thereof.

3. Method according to Claim 1 or 2, **characterised in that** firing is carried out at a temperature of up to 1400° C.

4. Method according to the claims 1 to 3, **characterised in that** the metal salt to be applied to the ceramic is previously separated into two fractions of different grain size distribution and both fractions are subsequently applied together to the ceramic.

5. Method according to Claim 4, **characterised in that** the one fraction has a grain size distribution of 0.3 mm to 1 mm and the second fraction a grain size distribution of smaller than 0.3 mm.

6. Method according to one of the claims 1 to 5 for manufacturing point patterns.

7. Method according to one of the claims 1 to 3, **characterised in that** two metal salts of different grain size are used and applied to the ceramic surface one after the other.

8. Method according to one of the claims 1 to -5, **characterised in that** the colour-causing metal salt is firstly mixed with a ceramic material also in powdered form, and subsequently applied to the ceramic surface.

9. Method according to Claim 7 or 8 for manufacturing coloured decoration with a relief-type surface.

10. Ceramic with coloured decoration and/or relief-type surface having a layer depth of the coloured ceramic surface of > 3 mm to 4 mm, obtainable with the method according to one of the claims 1 to 9.

## Revendications

1. Procédé pour la production d'un décor coloré sur des surfaces céramiques non émaillées, où au moins un sel métallique colorant et/ou un pigment coloré est appliqué sur la surface céramique sous forme pulvérisée, **caractérisé en ce que**
- la surface céramique est humidifiée avec de l'eau avant application du sel métallique et/ou du pigment coloré, et/ou **en ce que**
- de l'eau est vaporisée sur le sel métallique et/ou le pigment coloré après application sur la surface céramique, et **en ce que**
- la céramique est alors cuite.

2. Procédé selon revendication 1, **caractérisé en ce que** le sel métallique colorant ou le pigment coloré sont choisis entre des sels métalliques ou des pigments colorés de métaux transitoires, de terres rares ou des mélanges de ceux-ci.

3. Procédé selon revendication 1 ou 2, **caractérisé en ce que** la cuisson est effectuée à une température de 1400 °C maximum.

4. Procédé selon les revendications 1 à 3, **caractérisé en ce que** le sel métallique à appliquer sur la céramique est d'abord séparé en deux fractions de grosseurs de grain différentes, et **en ce que** les deux fractions sont ensuite appliquées ensemble sur la céramique.

5. Procédé selon revendication 4, **caractérisé en ce qu'**une fraction présente une grosseur de grain de 0,3 à 1 mm, et la seconde fraction une grosseur de grain inférieure à 0,3 mm.

6. Procédé selon l'une des revendications 1 à 5, pour la réalisation de trames de points.

7. Procédé selon l'une des revendication 1 à 3, **caractérisé en ce qu'**il est recouru à deux sels métalliques de grosseurs de grain différentes successivement appliquées sur la surface céramique.

8. Procédé selon l'une des revendication 1 à 5, **caractérisé en ce que** le sel métallique colorant est mélangé à une masse céramique également pulvérulente avant d'être appliqué sur la surface céramique.

9. Procédé selon revendication 7 ou 8 pour la production d'un décor coloré à surface en relief.

10. Céramique à décor coloré et/ou surface en relief avec une épaisseur de couche de la surface céramique colorée supérieure à 3 - 4 mm, obtenue conformément au procédé selon l'une des revendications 1 à 9.
